(19) Europäisches Patentamt
European Patent Office
Office européen des brevets

(11) **EP 3 619 800 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **18722484.5**

(22) Anmeldetag: **03.05.2018**

(51) Int Cl.:
*H02M 1/12* (2006.01)        *H01F 3/12* (2006.01)
*H01F 17/06* (2006.01)        *H01F 27/26* (2006.01)
*H03H 1/00* (2006.01)        *H03H 7/42* (2006.01)
*H01F 17/00* (2006.01)

(86) Internationale Anmeldenummer:
**PCT/EP2018/061299**

(87) Internationale Veröffentlichungsnummer:
**WO 2018/202749 (08.11.2018 Gazette 2018/45)**

(54) **INVERTER**

INVERTER

INVERSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2017 DE 102017109499**

(43) Veröffentlichungstag der Anmeldung:
**11.03.2020 Patentblatt 2020/11**

(73) Patentinhaber: **Valeo Siemens eAutomotive Germany GmbH**
**91056 Erlangen (DE)**

(72) Erfinder: **LINDENBERGER, Heinz**
**90441 Nürnberg (DE)**

(74) Vertreter: **Dr. Gassner & Partner mbB**
**Wetterkreuz 3**
**91058 Erlangen (DE)**

(56) Entgegenhaltungen:
**DE-A1- 3 340 494          DE-A1-102015 119 560**
**DE-U1-202016 104 468     KR-B1- 101 665 317**
**US-A- 5 731 666          US-A1- 2013 049 918**
**US-A1- 2014 286 068**

**Beschreibung**

Die Erfindung betrifft einen Inverter.

Ein solcher Inverter ist allgemein bekannt. So offenbart DE 10 2015 119 560 A1 einen Inverter als eine an einem Fahrzeug vorgesehene elektronische Vorrichtung zum Antreiben eines Elektromotors. Der Inverter hat ein Verbindungselement und einen Bus-Bar als Verdrahtung zum Verbinden eines Substrats des Inverters und des Verbindungselements. Elektrische Energie wird zu dem Inverter von einer Gleichstromquelle über das Verbindungselement geliefert. Außerdem hat der Inverter einen Ferritkern, der den Bus-Bar bedeckt. Der Bus-Bar ist durch ein Einführungsloch des Ferritkerns eingeführt.

US 2014/0286068 A1 offenbart eine Gleichtakt- und Gegentaktdrossel, umfassend einen ferromagnetischen Kern mit drei Schenkeln, die sich zwischen einem Unterteil und einem Oberteil erstrecken. Die drei Schenkel umfassen einen ersten Querschenkel, um den eine erste Spule gewickelt ist, einen zweiten Querschenkel, um den eine zweite Spule gewickelt ist, und einen zentralen Schenkel, der vom Oberteil durch einen ersten Luftspalt und vom Unterteil durch einen zweiten Luftspalt beabstandet ist.

US 5 731 666 A offenbart eine integriert-magnetische Anordnung für einen Filter mit verbesserter Dämpfung, umfassend: einen C-Kern mit einem oberen Abschnitt, einem ersten Bein und einem zweiten Bein; einen I-Kern, der benachbart zu dem ersten und zweiten Bein zum Ausbilden eines magnetischen Flusspfads dazwischen angeordnet ist; einen Shunt-Kern, dessen Permeabilität kleiner als eine Permeabilität des I-Kerns oder des C-Kerns ist, wobei der Shunt-Kern zwischen dem C-Kern und dem I-Kern angeordnet ist; eine erste Wicklung, die den I-Kern zwischen dem ersten Bein und dem Shunt-Kern umgibt; und eine zweite Wicklung, die den I-Kern zwischen dem zweiten Bein und dem Shunt-Kern umgibt. DE 33 40 494 A1 offenbart eine stromkompensierte Störschutzdrossel in Ringkernform mit zwei Wicklungen, wobei der Ringkern aus hochpermeablem Material besteht, mit erhöhter Streuinduktivität. Der Streufluss wird durch einen speichenförmigen im Innendurchmesser angebrachten magnetischen Bypass für die Feldlinien beeinflusst.

US 2013/049918 A1 offenbart eine Vorrichtung, umfassend einen magnetischen Kern, eine magnetische Platte, die innerhalb einen Innenumfangs des magnetischen Kerns angeordnet und von einer Innenwand des magnetischen Kerns durch einen ersten Spalt und einen zweiten Spalt beabstandet ist; und zwei Spulen, die um den magnetischen Kern gewickelt sind.

KR 101 665 317 B1 offenbart zwei von einem magnetischen Kern umgebene Stromschienen.

DE 20 2016 104468 A1 offenbart einen Filter für elektromagnetische Störungen aufweisend: eine Leiterplatte mit Leiterbahnen, mit einer ersten Seite und mit einer der ersten Seite gegenüberliegenden zweiten Seite, eine erste Stromschiene, die auf der ersten Seite der Leiterplatte befestigt ist und mit zumindest einer der Leiterbahnen elektrisch verbunden ist; eine zweite Stromschiene, die auf der zweiten Seite der Leiterplatte befestigt ist und mit zumindest einer der Leiterbahnen elektrisch verbunden ist; und zumindest ein magnetisches Element, das jeweils ringförmig um die erste und zweite Stromschiene herum angeordnet ist und mit der ersten und zweiten Stromschiene eine stromkompensierte Drossel ausbildet.

In einem den Inverter umgebenden Gehäuse sind eine erste und eine zweite Stromschiene aufgenommen. Die erste Stromschiene ist mit einem an der Gehäuseaußenseite vorgesehenen ersten Anschluss zur Verbindung mit einem Pluspol einer Batterie sowie einem Eingangsanschluss eines Zwischenkreiskondensators verbunden. Die zweite Stromschiene ist mit einem an der Gehäuseaußenseite vorgesehenen zweiten Anschluss zur Verbindung mit einem Minuspol der Batterie sowie einem weiteren Anschluss des Zwischenkreiskondensators verbunden. Der Zwischenkreiskondensator versorgt einen nachgeschalteten Wechselrichter mit Strom.

Beim Betrieb des Wechselrichters werden hochfrequente Gleichtakt-(Common Mode, CM)-Störungen sowie Gegentakt-(Differential-Mode, DM)-Störungen erzeugt. Gleichtakt-Störungen können u. a. durch einen die erste und die zweite Stromschiene umgebenden Ringkern aus einem ferromagnetischen Material vermindert werden. Zur Verminderung von Gegentakt-Störungen sind üblicherweise weitere Filter-Baugruppen erforderlich. - Der gegenwärtige Aufbau zur Verminderung von Gleich- und Gegentakt-Störungen ist relativ aufwändig. Abgesehen davon besteht ein Bedarf an einem Inverter mit einer verbesserten elektromagnetischen Verträglichkeit (EMV).

Aufgabe der Erfindung ist es, die Nachteile nach dem Stand der Technik zu beseitigen. Es soll insbesondere ein möglichst einfach und kostengünstig herstellbarer Inverter angegeben werden. Nach einem weiteren Ziel der Erfindung soll die elektromagnetische Verträglichkeit des Inverters verbessert sein.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Nach Maßgabe der Erfindung wird vorgeschlagen, dass in einem vom Ringkern umgebenen und zwischen den beiden Stromschienen gebildeten Zwischenraum ein Kern aus einem weiteren ferromagnetischen Material vorgesehen ist. - Damit gelingt es auf überraschend einfache und kostengünstige Weise nicht nur Gleichtakt- sondern auch Gegentakt-Störungen auf den Stromschienen wirkungsvoll zu vermindern.

Im Sinne der vorliegenden Erfindung wird unter dem Begriff "Inverter" allgemein eine Vorrichtung verstanden, mit der Gleichstrom in Wechselstrom und/oder Wechselstrom in Gleichstrom umgewandelt werden kann.

Unter dem Begriff "Stromschiene" wird allgemein ein elektrischer Leiter verstanden. Der elektrische Leiter weist vorzugsweise einen rechteckigen Querschnitt auf. Daneben sind auch andere Querschnittsformen, beispielsweise rund, oval, quadratisch und dgl. denkbar.

Unter einem "ferromagnetischen Material" wird im Sinne der vorliegenden Erfindung allgemein ein Material verstanden, bei welchem sich Elementarmagneten stabil ordnen können. Nach dieser allgemeinen Definition unterfällt im Sinne der vorliegenden Erfindung dem Begriff "ferromagnetisches Material" auch ein ferrimagnetisches Material.

Durch das erfindungsgemäß vorgeschlagene Vorsehen eines Kerns aus einem weiteren ferromagnetischen Material innerhalb des Ringkerns wird eine einstellbare Induktivität gebildet, welche Gegentakt-Störungen entgegenwirkt. Es kann damit eine effektive Filterung von Gegentakt-Störungen innerhalb des zur Filterung von Gleichtakt-Störungen vorhandenen Bauraums des Ringkerns realisiert werden. Der erfindungsgemäß vorgeschlagene Filter ist besonders kompakt.

Vorteilhafterweise ist zwischen dem Kern und der jeweils gegenüberliegenden Innenseite des Ringkerns ein vorgegebener erster Abstand vorgesehen. Durch den ersten Abstand kann die durch den Kern gebildete Induktivität eingestellt werden. Der erste Abstand kann 0,5 bis 4,0 mm, vorzugsweise 1,0 bis 3,0 mm, betragen.

Zwischen dem Kern und den jeweils benachbarten Stromschienen ist zweckmäßigerweise ein zweiter Abstand vorgesehen. Der zweite Abstand ist so gewählt, dass ein Stromfluss zwischen den Stromschienen sicher und zuverlässig vermieden wird.

Die Stromschienen weisen erfindungsgemäß zueinander weisende Ausnehmungen auf, welche den Kern abschnittsweise umgeben. Eine solche Ausnehmung kann in Draufsicht auf die Stromschiene beispielsweise einen rechteckigen Umriss haben. Durch das Vorsehen der vorgeschlagenen Ausnehmungen kann eine besonders kompakte Bauform erreicht werden.

Nach einer weiteren vorteilhaften Ausgestaltung weist das ferromagnetische und/oder das weitere ferromagnetische Material eine erste relative Permeabilität $\mu_{r1} > 10^3$ auf. Der Kern ist vorteilhafterweise mittels einer Halteeinrichtung im Ringkern gehalten, wobei die Halteeinrichtung aus einem Material mit einer zweiten relativen Permeabilität $\mu_{r2} < 10$ gebildet ist. Die Halteeinrichtung kann insbesondere aus einem Kunststoff, einer Vergussmasse oder dgl. hergestellt sein.

Als Ringkern wird vorteilhafterweise ein Ringbandkern aus einem nanokristallinen ferromagnetischen Material verwendet. Ein solches Material zeichnet, im Vergleich zu üblichen Ferrit-Materialien, sich durch eine besonders hohe relative Permeabilität aus, bei gleichzeitig etwa doppelt so hoher Sättigungs-Flussdichte (typisch > 1 Tesla) und besserer Wirkung im hohen Frequenzbereich. Bei dem ferromagnetischen oder weiteren ferromagnetischen Material kann es sich insbesondere um ein ferrimagnetisches Material handeln.

Der Ringkern kann eine ovale oder im Wesentlichen rechteckige Durchgriffsfläche aufweisen. Die Durchgriffsfläche ist insbesondere an die Querschnittsfläche der hindurchgeführten Stromschienen zur Erzielung einer besonders kompakten Bauform angepasst.

Nachfolgend werden Ausführungsbeispiele der Erfindung anhand der Zeichnungen näher erläutert. Es zeigen:

Fig. 1 ein schematisches Schaltbeispiel für einen Inverter,

Fig. 2 eine erste Schnittansicht durch eine Ringkerndrossel und

Fig. 3 eine Schnittansicht gemäß der Schnittlinie A-A' in Fig. 2.

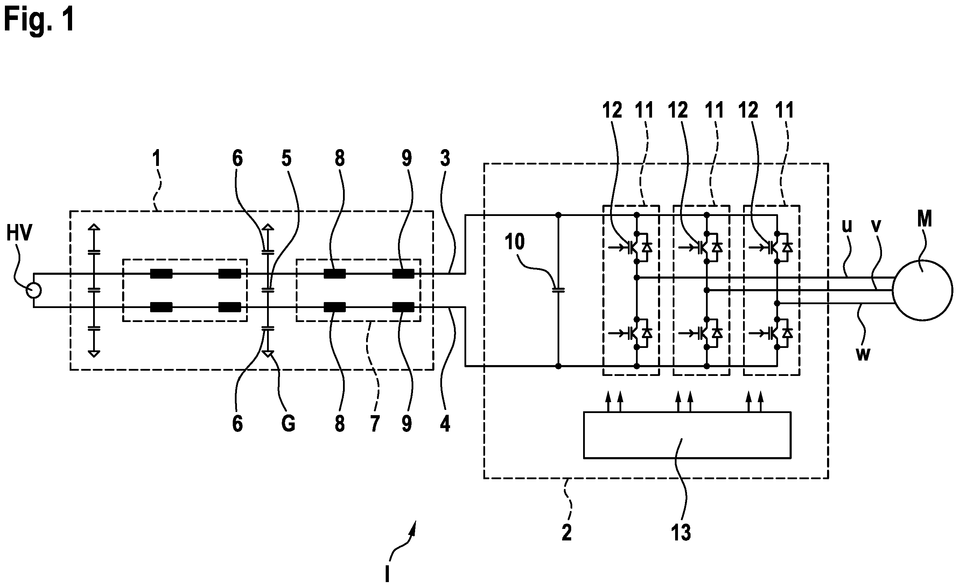

In Fig. 1 ist mit dem Bezugszeichen HV eine Batterie und mit dem Bezugszeichen M ein Drehstrommotor bezeichnet. Zwischen die Batterie HV und den Drehstrommotor M ist ein allgemein mit dem Bezugszeichen I bezeichneter Inverter geschaltet. Der Inverter I umfasst eine der Batterie HV nachgeschaltete Filterstufe 1 sowie einen der Filterstufe 1 nachgeschalteten Wechselrichter 2, dessen Ausgänge mit dem Drehstrommotor M verbunden sind.

Die Filterstufe 1 ist im vorliegenden Ausführungsbeispiel mehrstufig ausgeführt. Sie kann auch nur eine Stufe umfassen.

Eine erste Stromschiene ist mit dem Bezugszeichen 3 und eine zweite Stromschiene mit dem Bezugszeichen 4 bezeichnet. Jede Stufe der Filterstufe 1 kann einen zwischen die erste Stromschiene 3 und die zweite Stromschiene 4 geschalteten X-Kondensator 5 sowie jeweils einen von der ersten Stromschiene 3 und der zweiten Stromschiene 4 gegen das Gehäusepotenzial geschalteten Y-Kondensator 6 umfassen.

Mit dem Bezugszeichen 7 ist allgemein ein Filter-Element zur Verminderung von Gleich- und Gegentakt-Störungen bezeichnet. Das Filter-Element 7 umfasst eine die erste Stromschiene 3 und die zweite Stromschiene 4 umgebende Ringkerndrossel 8 sowie durch den Kern (hier nicht gezeigt) gebildete Gegentakt-Drosseln 9.

Die erste Stromschiene 3 und die zweite Stromschiene 4 sind ausgangsseitig mit einem Zwischenkreiskondensator 10 verbunden. Mit dem Bezugszeichen 11 sind dem Zwischenkreiskondensator 10 nachgeschaltete Halbbrücken bezeichnet, welche jeweils zwei Leistungstransistoren 12 umfassen. Anstelle jedes der Leistungstransistoren 12 können auch Leistungstransistor-Gruppen aus mehreren parallel geschalteten Leistungstransistoren vorgesehen sein. Die Halbbrücken 11 werden mittels eines Controllers 13 mittels Pulsweiten-modulierter Signale so angesteuert, dass sich ein Drehstrom in den Phasen u, v und w zum Betrieb des Drehstrommotors M ergibt.

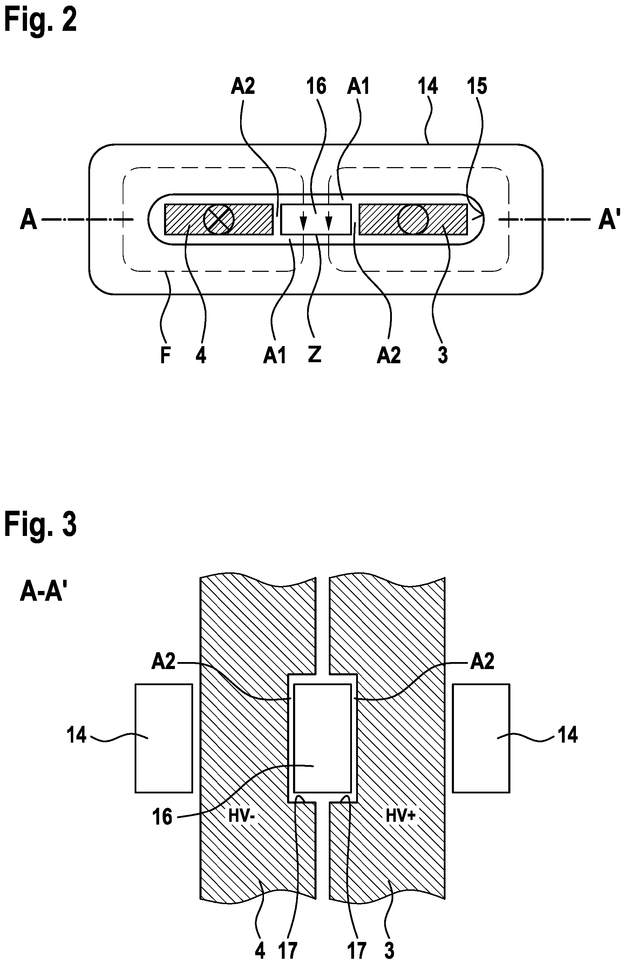

Wegen den hochfrequenten Schaltvorgängen beim Betrieb der Halbbrücken 11 bilden sich auf der ersten Stromschiene 3 und der zweiten Stromschiene 4 Gleichtakt- und Gegentakt-Störungen. Zur Verminderung solcher Störungen ist erfindungsgemäß u. a. das Filter-Element 7 vorgesehen, welches in den Fig. 2 und 3 näher beschrieben ist.

In den Fig. 2 und 3 ist mit dem Bezugszeichen 14 ein aus einem ferromagnetischen Material hergestellter Ringkern bezeichnet. Es kann sich dabei insbesondere um einen Ringbandkern aus einem nanokristallinen ferromagnetischen Material handeln. Insbesondere bei Ringbandkernen lassen sich wegen der zur Herstellung erforderlichen Wickeltechnik nicht ohne Weiteres beliebige Geometrien bezüglich einer den Ringbandkern durchgreifenden Durchgriffsfläche 15 realisieren. D. h. bei Ringbandkernen weist die Durchgriffsfläche 15 meist eine runde, eine ovale oder annähernd rechteckige Form auf.

Mit dem Bezugszeichen 16 ist ein aus einem weiteren ferromagnetischen Material hergestellter Kern bezeichnet, welcher in einem Zwischenraum Z zwischen der ersten Stromschiene 3 und der zweiten Stromschiene 4 sowie den gegenüberliegenden Innenseiten des Ringkerns 14 gebildet ist. Der Kern 16 weist gegenüber den Innenseiten des Ringkerns 14 einen ersten Abstand A1 auf. Mit dem Bezugszeichen A2 ist ein zweiter Abstand bezeichnet, welcher zwischen dem Kern 16 und den Stromschienen 3, 4 gebildet ist.

Die Funktion des vorgeschlagenen Filter-Elements 7 ist Folgende:
Der Kern 16 bildet zusammen mit dem Ringkern 14 eine einstellbare Induktivität, welche Gegentakt-Störungen vermindert. Der Kern 16 bietet für durch Gegentakt-Störungen verursachte Flusslinien F einen magnetischen Pfad an und ermöglicht so die Erzeugung einer Gegentakt-Induktivität. Durch den ersten Abstand 1 kann die Größe dieser Gegentakt-Induktivität eingestellt werden.

Wegen der Dimensionierung des Kerns 16 und der damit erzeugten Induktivität wird beispielhaft Folgendes angegeben:

$$B = (L\,i)/A \quad \text{bzw.} \quad A = (L\,i)/B$$

wobei

B  die Induktionsflussdichte,
L  die Gegentakt-Induktivität,
i  der Strom durch die Stromschienen und
A  die Querschnittsfläche des Kerns 16 ist.

Unter der Annahme von L = 2 x 100 nH und i = 200 A ergibt sich für eine Fläche A = 1 cm$^2$ ein B = 0,4 Tesla.

Zur Erzielung eines besonders kompakten Designs können die erste Stromschiene 3 und die zweite Stromschiene 4 jeweils eine Ausnehmung 17 aufweisen. Die Ausnehmung 17 kann in Draufsicht beispielsweise rechteckig ausgestaltet sein (siehe Fig. 3).

## Patentansprüche

1. Inverter (I) mit einer ersten Stromschiene (3) zum Anschluss an einen Pluspol einer Batterie (HV) und einer zweiten Stromschiene (4) zum Anschluss an einen Minuspol der Batterie (HV) und einem Filter (7) zur Verminderung von Gleich- und Gegentaktstörungen, welcher einen die erste (3) und die zweite Stromschiene (4) umgebenden Ringkern (14) aus einem ferromagnetischen Material umfasst, wobei in einem vom Ringkern (14) umgebenen und zwischen den beiden Stromschienen (3, 4) gebildeten Zwischenraum (Z) ein Kern (16) aus einem weiteren ferromagnetischen Material vorgesehen ist, wobei die Stromschienen (3, 4) zuei-nander weisende Ausnehmungen (17) aufweisen, welche den Kern (16) abschnittsweise umgeben.

2. Inverter (I) nach Anspruch 1, wobei zwischen dem Kern (16) und den jeweils gegenüberliegenden Innenseiten des Ringkerns (14) ein vorgegebener erster Abstand (A1) vorgesehen ist.

3. Inverter (I) nach einem der vorhergehenden Ansprüche, wobei zwischen dem Kern (16) und den jeweils benachbarten Stromschienen (3, 4) ein vorgegebener zweiter Abstand (A2) vorgesehen ist.

4. Inverter (I) nach einem der vorhergehenden Ansprüche, wobei eine jeweilige Ausnehmung (17) in Draufsicht auf die Stromschiene (3, 4) einen rechteckigen Umriss hat.

5. Inverter (I) nach einem der vorhergehenden Ansprüche, wobei das ferromagnetische und/oder das weitere ferromagnetische Material eine erste relative Permeabilität $\mu_{r1} > 10^3$ aufweist.

6. Inverter (I) nach einem der vorhergehenden Ansprüche, wobei der Kern (16) mittels einer Haltereinrichtung im Ringkern (14) gehalten ist, wobei die Halteeinrichtung aus einem Material mit einer zweiten relativen Permeabilität $\mu_{r2} < 10$ gebildet ist.

7. Inverter (I) nach Anspruch 6, wobei die Halteeinrichtung aus einem Kunststoff gebildet ist.

8. Inverter (I) nach einem der vorhergehenden Ansprüche, wobei der Ringkern (14) ein Ringbandkern aus einem nanokristallinen ferromagnetischen Material ist.

9. Inverter (I) nach einem der vorhergehenden Ansprüche, wobei das ferromagnetische und/oder weitere ferromagnetische Material ein ferrimagnetisches Material ist.

10. Inverter (I) nach einem der vorhergehenden Ansprüche, wobei der Ringkern (14) eine runde, ovale oder im Wesentlichen rechteckige Durchgriffsfläche (15) aufweist.

**Claims**

1. Inverter (I) having a first busbar (3) for connection to a positive pole of a battery (HV) and a second busbar (4) for connection to a negative pole of the battery (HV) and a filter (7) for reducing common-mode and push-pull interference, which filter comprises a toroidal core (14) made of a ferromagnetic material and surrounding the first (3) and the second busbar (4), wherein a core (16) of a further ferromagnetic material is provided in an intermediate space (Z) surrounded by the toroidal core (14) and formed between the two busbars (3, 4), wherein the busbars (3, 4) have recesses (17) facing one another which surround the core (16) in sections.

2. Inverter (I) according to claim 1, wherein a predetermined first distance (A1) is provided between the core (16) and the respective opposite inner sides of the toroidal core (14).

3. Inverter (I) according to any one of the preceding claims, wherein a predetermined second distance (A2) is provided between the core (16) and the respective adjacent busbars (3, 4).

4. Inverter (I) according to any one of the preceding claims, wherein a respective recess (17) has a rectangular outline in plan view of the busbar (3, 4).

5. Inverter (I) according to any one of the preceding claims, wherein the ferromagnetic and/or the further ferromagnetic material has a first relative permeability $\mu_{r1} > 10^3$.

6. Inverter (I) according to any one of the preceding claims, wherein the core (16) is retained in the toroidal core (14) by means of a retaining means, the retaining means being formed of a material having a second relative permeability $\mu_{r2} < 10$.

7. Inverter (I) according to claim 6, wherein the holding means is formed of a plastic.

8. Inverter (I) according to any one of the preceding claims, wherein the toroidal core (14) is a ribbon-shaped toroidal core of a nanocrystalline ferromagnetic material.

9. Inverter (I) according to any one of the preceding claims, wherein the ferromagnetic and/or the further ferromagnetic material is a ferrimagnetic material.

10. Inverter (I) according to any one of the preceding claims, wherein the toroidal core (14) has a round, an oval or a substantially rectangular reach-through surface (15).

**Revendications**

1. Onduleur (I) comprenant un premier rail conducteur (3) destiné à être raccordé à un pôle positif d'une batterie (HV) et un second rail conducteur (4) destiné à être raccordé à un pôle négatif de la batterie (HV) et un filtre (7) servant à réduire des parasites symétriques et dissymétriques, lequel comprend un noyau annulaire (14) entourant le premier (3) et le second rail conducteur (4) composé d'un matériau ferromagnétique, en ce qu'un noyau (16) composé d'un autre matériau ferromagnétique est prévu dans un espace intermédiaire (Z) entouré par le noyau annulaire (14) et formé entre les deux rails conducteurs (3, 4), en ce que les rails conducteurs (3, 4) comportent des évidements (17) qui se font face, lesquels entourent partiellement le noyau (16).

2. Onduleur (I) selon la revendication 1, en ce qu'un premier espacement prédéfini (A1) est prévu entre le noyau (16) et les faces intérieures respectivement opposées du noyau annulaire (14).

3. Onduleur (I) selon l'une des revendications précédentes, en ce qu'un second espacement prédéfini (A2) est prévu entre le noyau (16) et les rails conducteurs (3, 4) respectivement adjacents.

4. Onduleur (I) selon l'une des revendications précédente, en ce que chaque évidement (17) a un contour rectangulaire vue de dessus sur le rail conducteur (3, 4).

5. Onduleur (I) selon l'une des revendications précédentes, en ce que le matériau ferromagnétique et/ou l'autre matériau ferromagnétique présente une première perméabilité relative $\mu_{r1} > 10^3$.

6. Onduleur (I) selon l'une des revendications précédentes, en ce que le noyau (16) est maintenu dans l'anneau annulaire (14) au moyen d'un dispositif de retenue, en ce que le dispositif de retenue est réalisé en un matériau présentant une seconde perméabilité relative $\mu_{r2} < 10$.

7. Onduleur (I) selon la revendication 6, en ce que le dispositif de retenue est réalisé en matière plastique.

**8.** Onduleur (I) selon l'une des revendications précédentes, en ce que le noyau annulaire (14) est un tore enroulé composé d'un matériau ferromagnétique nanocristallin.

**9.** Onduleur (I) selon l'une des revendications précédentes, en ce que le matériau ferromagnétique et/ou l'autre matériau ferromagnétique est un matériau ferrimagnétique.

**10.** Onduleur (I) selon l'une des revendications précédentes, en ce que le noyau annulaire (14) présente une surface de pénétration (15) ronde, ovale ou sensiblement rectangulaire.

Fig. 1

# Fig. 2

# Fig. 3

A-A'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015119560 A1
- US 20140286068 A1
- US 5731666 A
- DE 3340494 A1
- US 2013049918 A1
- KR 101665317 B1
- DE 202016104468 A1